# Europäisches Patentamt

## European Patent Office
## Office européen des brevets

(11) Veröffentlichungsnummer: **0 264 698**

**A2**

(12) **EUROPÄISCHE PATENTANMELDUNG**

(21) Anmeldenummer: **87114466.3**

(22) Anmeldetag: **03.10.87**

(51) Int. Cl.⁴: **G01L 5/24**

(30) Priorität: **14.10.86 DE 3634896**

(43) Veröffentlichungstag der Anmeldung:
**27.04.88 Patentblatt 88/17**

(84) Benannte Vertragsstaaten:
**DE ES FR GB IT SE**

(71) Anmelder: **EGM Entwicklungsgesellschaft für Montagetechnik GmbH & Co. KG**
**Gutenbergstrasse 4**
**D-3012 Langenhagen 1(DE)**

(72) Erfinder: **Badur, Klaus**
**Scheelenkamp 14**
**D-3008 Garbsen-Berenbostel 4(DE)**
Erfinder: **Kalter, Detlef**
**Hartungstrasse 9**
**D-2800 Bremen 1(DE)**
Erfinder: **Fröhlich, Stephan**
**Ringstrasse 25**
**D-3014 Laatzen 4(DE)**

(74) Vertreter: **Bolte, Erich, Dipl.-Ing. et al**
**c/o Meissner, Bolte & Partner Patentanwälte**
**Holleralle 73**
**D-2800 Bremen 1(DE)**

(54) **Verfahren und Vorrichtung zum Anziehen einer Schraubverbindung.**

(57) Beim Anziehen von Schraubverbindungen sollen diese bis über die Streckgrenze, in den plastischen Bereich hinein in reproduzierbarer Weise angezogen werden. Es wird vorgeschlagen, den Anziehvorgang frühestens dann zu beenden, wenn das Drehmoment einen voreingestellten Wert überschritten hat und die zweite Ableitung des Drehmomentes nach dem Drehwinkel einen vorgegebenen Konstantwert dem Betrag nach überschreitet.

EP 0 264 698 A2

## Verfahren und Vorrichtung zum Anziehen einer Schraubverbindung

Die Erfindung betrifft ein Verfahren nach dem Oberbegriff des Patentanspruches 1, sowie eine Vorrichtung zur Durchführung des Verfahrens.

In automatisierten Fertigungsverfahren, insbesondere im Motoren-und Automobilbau werden Schraubverbindungen von Automaten hergestellt. Derartige Automaten weisen Elektroschrauber auf, welche z. B. die von Hand aufgedrehten Muttern selbsttätig festziehen. Hierbei besteht das Problem, die Schraubverbindung in exakt reproduzierbarer Weise anzuziehen, so daß z. B. der Zylinderkopf mit einem vorgegebenen Anpreßdruck auf dem Motorblock sitzt.

Es ist allgemein bekannt, daß man - ähnlich wie bei der Montage per Hand - den Einschraubvorgang dann abbrechen kann, wenn das aufgebrachte Drehmoment, das ja dem Anpreßdruck im wesentlichen proportional ist, einen bestimmten Betrag erreicht hat.

Um Kosten zu sparen, wählt man die Festigkeit der Schraubverbindung, z. B. den Durchmesser des Stehbolzens, nur so groß, daß gerade die gewünschte Haltekraft aufgenommen werden kann. Beim Anziehen dieser Schraubverbindung belastet man nun das Material bis über den Hookschen Bereich, so daß eine Längung eintritt.

Aus der DE-OS 17 03 681 ist eine Schraubvorrichtung bekannt, bei der das Anziehen der Schraube dann abgebrochen wird, wenn die Steigung des Drehmomentes nach dem Drehwinkel einen vorgegebenen Wert erreicht hat. Hier wird die Erkenntnis angewendet, daß beim Anziehen einer Schraubverbindung zunächst ein linearer Bereich (elastische Verformung) des Drehmomentes nach dem Drehwinkel vorliegt und sich die Steigung der Kurve nach Erreichen der Fließgrenze vermindert. Hierbei wird davon ausgegangen, daß der Verlauf des Anziehvorganges bekannt und vorhersagbar ist. Es ist hier also immer notwendig, zunächst eine Probe-Schraubverbindung zu schaffen, um die gewünschte Kurvensteigung messen und in der Schraubvorrichtung speichern zu können.

Aus der DE-PS 23 36 896 ist eine Vorrichtung bekannt, bei der zunächst die Steigung der Kurve im linearen Bereich gemessen und gespeichert wird und dann, sobald sich die Steigung der Kurve ändert bzw. abflacht, das Verhältnis zwischen dieser (maximalen) Steigung und der momentanen Kurvensteigung ermittelt und mit einem (Minimal-)Wert verglichen wird. Sobald dieser Minimalwert unterschritten wird, stoppt der Schrauber. Der Nachteil bei dieser Vorrichtung bzw. Methode ist aber der, daß die Momentenkurve nicht ideal glatt bzw. stetig verläuft, sondern aufgrund von Materialrauhigkeiten wellig. Dies führt dazu, daß die erste Ableitung bzw. deren Resultat einen derart - schwankenden Verlauf hat, daß die Schwelle bereits bei viel zu hohen Krümmungs-Mittelwerten überschritten wird. Man versucht sich dadurch zu behelfen, daß man den Schrauber erst nach einer bestimmten Anzahl von Unterschreitungen des Schwellenwertes stoppt. Wenn aber diese Anzahl zu groß gewählt wurde, kann der Schrauber überhaupt nicht mehr abgestoppt werden, da nach dem Erreichen des gewünschten Krümmungswertes keine weitere Schwellenunterschreitung mehr vorkommt.

Ausgehend vom oben genannen Stand der Technik ist es Aufgabe der vorliegenden Erfindung ein Verfahren der eingangs genannten Art dahingehend weiterzubilden, daß eine korrekte Abschaltung des Schraubers bei reproduzierbaren Längungswerten erzielbar ist.

Diese Aufgabe wird durch die im Kennzeichen des Patentanspruches 1 angegebenen Merkmale gelöst, eine Vorrichtung zur Durchführung des Verfahrens ist in Anspruch 4 beschrieben.

Überraschenderweise hat es sich gezeigt, daß zum einen die zweite Ableitung der untersuchten Funktion das Materialverhalten im Fließbereich wesentlich besser und reproduzierbarer wiedergibt als nur die Steigung (erste Ableitung) der Funktion, zum anderen können die scharfen Peaks, die aus den relativ langsamen Schwankungen in der ersten Ableitung resultieren, mit einfachen Mitteln herausgefiltert werden, so daß das Erreichen eines Grenzwertes exakter als bisher definierbar ist.

Bevorzugte Ausführungsformen der Erfindung ergeben sich aus den Unteransprüchen und den nachfolgenden Ausführungsbeispielen, die anhand von Abbildungen näher definiert werden. Hierbei zeigt:

Fig. 1 ein Diagramm zur Darstellung des Drehmomentverlaufes über den Drehwinkel und

Fig. 2 ein schematisiertes Blockchaltbild der Vorrichtung zur Durchführung des Verfahrens.

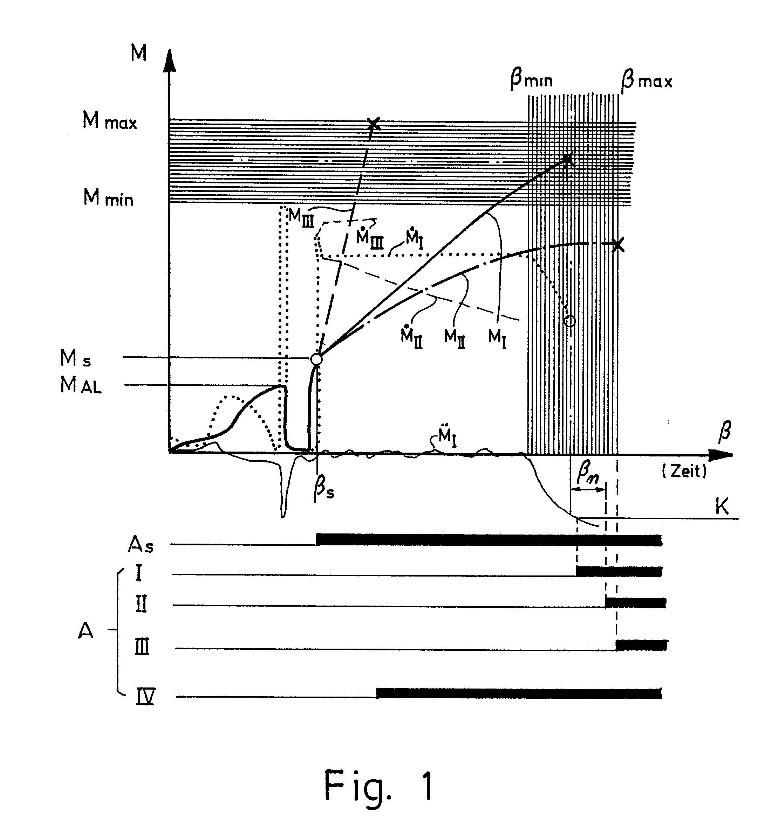

Zunächst wird anhand von Fig. 1 das erfindungsgemäße Verfahren näher erläutert. In der Abbildung ist nach oben das auf die Verschraubung aufgebrachte Drehmoment M, nach rechts der Drehwinkel $\beta$, bzw. bei konstanter Drehgeschwindigkeit, die Zeit aufgetragen.

Wenn man mit einem Elektroschrauber eine Mutter auf einen Stehbolzen aufsetzt, so steigt zunächst das aufgebrachte Drehmoment bis zum Anlegemoment $M_{AL}$ an und fällt dann während des Eindrehens der Schraube fast bis gegen Null ab. Sobald die Mutter Flächenkontakt hat, steigt - Kontakt der zu fügenden Teile vorausgesetzt - das Drehmoment bis zum Schwell-Drehmoment $M_s$

steil an und geht dann in einen linearen Bereich über. Dieser lineare Bereich bedeutet, daß der Stehbolzen bzw. alle übrigen elastisch verformbaren Teile, gespannt wird. Die sich ergebende Kurve ist mit $M_I$ bezeichnet. Wenn das Material des Stehbolzens über den Hookschen Bereich gespannt wird, so beginnt sich die Kurve $M_I$ abzuflachen, weicht also vom linearen Verlauf ab. Wenn ein bestimmtes Maß der Längung des Bolzens erreicht ist muß der Elektroschrauber abgeschaltet bzw. gestoppt werden.

Mit $M'$ ist die erste Ableitung der Kurve $M_I$ bezeichnet, mit $M'_I$ ist die zweite Ableitung der Kurve $M_I$ nach dem Winkel $\beta$ (bzw. nach der Zeit) bezeichnet. Gemäß einer ersten bevorzugten Ausführungsform des erfindungsgemäßen Verfahrens wird der Elektroschrauber dann abgestellt, wenn die zweite Ableitung $M_I''$ einen voreingestellten Wert K unterschreitet bzw. dem Betrag nach überschreitet. Da aber zu Beginn des Einschraubens, z. B. in dem Bereich, in dem das Anlagemoment erreicht wird, extreme Schwankungen des Drehmomentverlaufes auftreten, die (noch) nicht zu einem Abschalten des Schraubers führen sollen, wird die Drehmomentkurve zusätzlich auf Überschreiten des Schwell-Momentes $M_S$ überwacht. Bei Überschreiten des Schwellmomentes $M_S$ wird ein Ausgangssignal $A_S$ erzeugt. Erst bei gleichzeitigem Vorliegen des Ausgangssignales $A_S$ und bei Unterschreiten der Schwelle K durch die zweite Ableitung des Drehmomentes wird gemäß Fig. 1 Darstellung I ein Abschaltsignal A gegeben, der Elektroschrauber wird angehalten.

Der Kurvenlauf in der beiliegenden Fig. 1 ist idialisiert gezeichnet. In der Praxis verläuft die Drehmomentkurve $M_I$ wesentlich unruhiger, was in der Kurve $M_I'$ zu langsamen, in der Kurve $M_I''$ zu sehr schnellen Schwankungen führt. Diese schnellen Schwankungen werden durch Filterung (gleitende Mittelwertsbildung oder dgl.) geglättet. Da die Schwankungen der Kurve $M_I''$ wesentlich schneller verlaufen, also höher frequent sind als die Änderung der Steigung der Kurve $M_I$, kann die untere Grenzfrequenz des "Tiefpaßfilters" relativ niedrig gelegt werden, ohne Gefahr zu laufen, daß der Schrauber nicht rechtzeitig abgestellt werden kann.

Bei einer weiteren bevorzugten Ausführungsform der Erfindung wird das Abschaltsignal A nicht sofort nach Unterschreiten der Schwelle K abgegeben, sondern erst dann, wenn die Schraubverbindung noch um einen zusätzlichen Winkelbetrag $\beta_n$ fester gezogen wurde. Diese Ausführungsform ist in der Kurve II gezeigt. Dadurch wird sichergestellt, daß auch bei trotz Filterung auftretenden vorzeitigen Unterschreiten der Schwelle K dennoch eine hinreichende Längung erzielt wird.

Vorzugsweise werden, um fehlerhafte Schraubverbindungen, die in grundsätzlich abweichenden Drehmomentkurven resultieren, wie sie mit $M_{II}$ und $M_{III}$ bezeichnet sind, aufzudecken, zusätzlich zum oben beschriebenen Verfahren noch weitere Entscheidungskriterien (mit Priorität) zur Erzeugung eines Abschaltsignales A verwendet.

Im Fall $M_{II}$, in dem die zweite Ableitung des Drehmomentes nach dem Drehwinkel niemals die Schwelle K unterschreitet, wird dann ein Abschaltsignal A gegeben (Kurve III), wenn ein voreingestellter Maximalwinkel $\beta_{max}$ erreicht ist, bei diesem Wert aber ein minimales Drehmoment $M_{min}$ noch nicht erreicht wurde. Gleichzeitig wird ein Warnsignal abgegeben, damit eine Bedienungsperson den Fehler aufdecken und ggf. korrigieren kann.

Beim fehlerhaften Drehmomentverlauf $M_{III}$ wird das Abschaltsignal A dann gegeben, wenn das Drehmoment einen Maximalwert $M_{max}$ überschreitet, ein minimaler Drehwinkelwert $\beta_{min}$ aber noch nicht erreicht wurde. Auch in diesem Fall wird ein Warnsignal gegeben (Kurve IV).

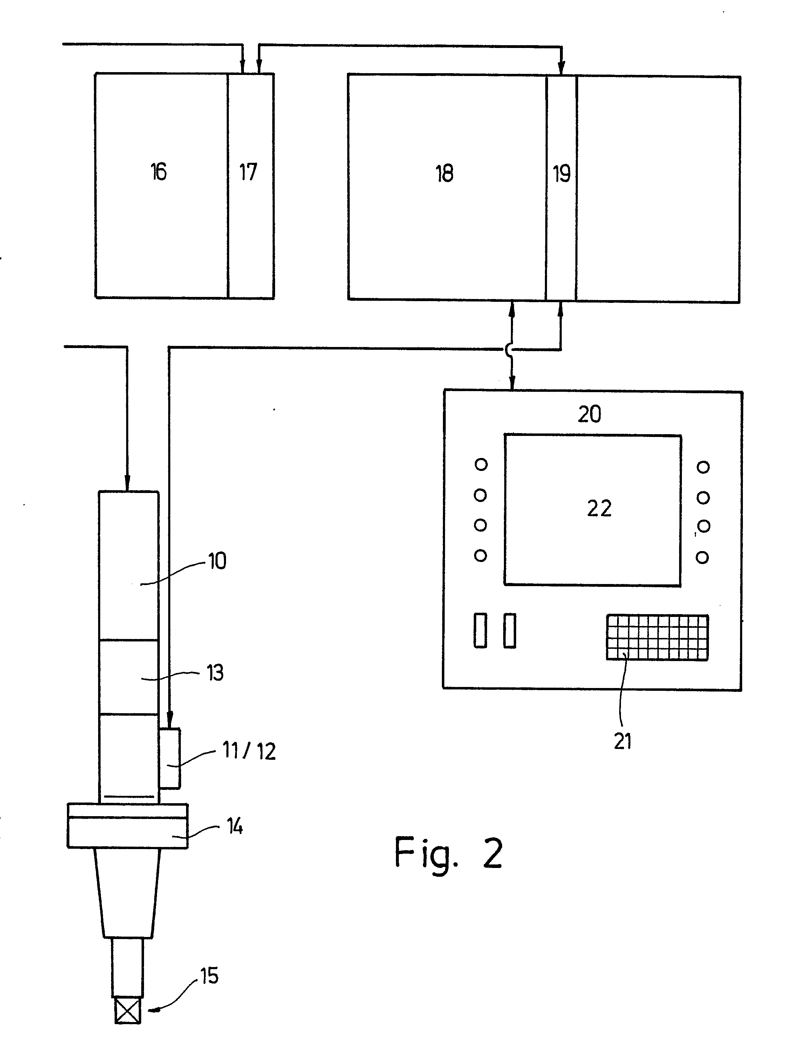

Im folgenden wird der prinzipielle Aufbau der Vorrichtung zur Durchführung des erfindungsgemäßen Verfahrens näher beschrieben. Wie aus Fig. 2 hervorgeht umfaßt der Elektroschrauber einen Elektromotor 10, dem ein Planetengetriebe 13 nachgeschaltet ist. Die Ausgangswelle des Planetengetriebes 13 geht über einen Drehwinkelgeber 11 und einen Drehmomentgeber 12 auf ein Spindellager 14, das eine Werkzeugaufnahme 15 trägt.

Der Elektromotor 10 ist vorzugsweise ein Drehstrommotor, der über einen Servoverstärker 17 angesteuert wird. Der Servoverstärker 17 umfaßt eine Vier-Quadrantensteuerung, die in Verbindung mit dem Drehstrommotor eine besonders exakte Steuerung (schnelles Abschalten) ermöglicht. Der Servoverstärker 17 wird von einem Netzteil 16 mit Strom versorgt.

Die Ausgangssignale des Drehwinkelgebers 11 und des Drehmomentgebers 12 werden über eine Meß-Interface 19 einer (handelsüblichen) Steuerelektronik 18 zugeführt. Die Steuerelektronik 18 steht über einen Datenbus mit einer Recheneinheit 20 in Verbindung, die eine Eingabetastatur 21 und einen Ausgabebildschirm 22 aufweist.

Das Meß-Interface 19 umfaßt zusätzlich ein Ausgabe-Interface, über das es mit dem Servoverstärker 17 verbunden ist.

Die Recheneinheit 20 ist vorzugsweise als Digitalrechner aufgebaut, der die oben bereits beschriebenen Rechen-und Vergleichsvorgänge durchführt und das Stopsignal A der Steuerungselektronik 18 zuführt. Über die Eingabetastatur 21 der Recheneinheit 20 werden die Schraubparameter, sowie die oben beschriebenen Grenzwerte eingegeben. Weiterhin findet in der Recheneinheit 20 auch die (Tiefpaß-)Filterung der Drehmomentkurve in an sich bekannter Weise statt.

Zur besseren Überwachung des Einschraubvorganges ist es von Vorteil, wenn die Drehmomentkurve über dem Drehwinkel auf dem Bildschirm 22 aufgezeichnet werden kann. Insbesondere ist es von Vorteil, wenn die Anzeige dann erfolgt, wenn ein Störungsfall (Kurven $M_{II}$ oder $M_{III}$) vorliegt. Der Verlauf der Drehmomentkurve kann dann der Bedienungsperson Aufschluß über den vorliegenden Fehler geben. Weiterhin ist es von Vorteil, wenn die Eingabe der Schraubparameter im interaktiven Betrieb über den Bildschirm 22 erfolgt, so daß die Bedienungsperson zur Einspeicherung betriebsnotwendiger Daten aufgefordert wird.

Eine zusätzliche Sicherheitsüberwachung ergibt sich in vorteilhafter Weise dann, wenn ein Abschaltsignal (zusätzlich zu den oben beschriebenen Kriterien) dann ausgegeben wird, wenn der dem Elektromotor 10 zugeführte Strom einen Maximalwert überschreitet. Dadurch ist sichergestellt, daß auch bei einer Fehleingabe des maximal aufzuwendenden Drehmomentes keine Überlastung des Motors 10 erfolgen kann. Die Maximalstrom-Einstellung kann auch auf einen Wert festgesetzt werden, der dem oben beschriebenen Maximaldrehmoment $M_{max}$ entspricht. Man erreicht dadurch eine doppelte Sicherung vor Zerstörung der Schraubverbindung, selbst wenn der Drehmomentgeber ausgefallen ist.

Eine Überwachung des Drehwinkelgebes 11 ist dadurch möglich, daß man dann, wenn trotz Stromzufuhr zum Elektromotor 10 keine Änderung des Drehwinkels $\beta$ erfolgt, die Anlage abschaltet und ein Alarmsignal ausgibt. Hierdurch wird sichergestellt, daß der oben beschriebene Drehmomentverlauf $M_{II}$, bei dem ja das maximale Drehmoment und auch die zweite Ableitung des Drehmomentes nie die Grenzwerte erreichen und dennoch ein Bruch der Schraubverbindung auftreten könnte, sicher vermieden wird.

Selbsverständlich erstreckt sich die Erfindung auch auf die möglichen Kombinationen der oben beschriebenen Merkmale.

**Ansprüche**

1. Verfahren zum Anziehen einer Schraubverbindung, wobei man das aufgebrachte Drehmoment (M) und den Drehwinkel ($\beta$) mißt und den Anziehvorgang dann beendet, wenn die Verbindung die Streckgrenze überschreitet und sich im Bereich bleibender Längung befindet, **dadurch gekennzeichnet,** daß man den Anziehvorgang frühestens dann beendet, wenn das Drehmoment (M) einen voreingestellten Wert (Schwellmoment $M_S$) überschritten hat und die zweite Ableitung des Drehmomentes nach dem Drehwinkel ($M''(d\beta)$) einen vorgegebenen Konstantwert (K) dem Betrag nach überschreitet.

2. Verfahren nach Anspruch 1, dadurch gekennzeichnet, daß man die Schraubverbindung nach Überschreiten des Konstantwertes (K) noch um einen vorgegebenen, konstan ten Winkelbetrag fester zieht, bis man den Anziehvorgang beendet.

3. Vorrichtung zur Durchführung des Verfahrens nach einem der Ansprüche 1 oder 2, mit Antriebsmitteln (10), Meßwertgebern (Drehwinkelgeber 11, Drehmomentgeber 12) zwischen den Antriebsmitteln (10) und Verbindungsmitteln (Werkzeugaufnahme 15) zum lösbaren Koppeln der Antriebsmittel (10) mit dem anzuziehenden Teil (Mutter, Schraube) der Schraubverbindung, mit Steuerungsmitteln (17-20) zum Beurteilen der Ausgangssignale der Meßwertgeber (11, 12) und davon abhängigem Steuern (Abschalten) der Antriebsmittel (10), und mit Dateneingabemitteln (21) zum Eingeben der Schraubparameter, dadurch gekennzeichnet, daß die Steuerungsmittel umfassen:

a) eine (Analog-oder Digital-)Recheneinheit (20), welche die von den Meßwertgebern (11, 12) ausgegebenen Signale mindestens bereichsweise zur Bildung der zweiten Ableitung ($M'(d\beta)$) des Drehmomentes (M) nach dem Drehwinkel ($\beta$) verknüpft,

b) eine erste Vergleichereinrichtung, die das Drehmoment (M) mit einem voreingestellten Wert (Schwellmoment $M_S$) vergleicht und ein erstes Ausgangssignal ($A_S$) bei Überschreiten des Wertes ($M_S$) abgibt,

c) eine zweite Vergleichereinrichtung, welche das Ergebnis der Verknüpfung mit einem über die Dateneingabemittel (21) eingegebenen Wert (K) vergleicht und bei Vorliegen des ersten Ausgangssignals ($A_S$) ein Signal (A) zum Abschalten der Antriebsmittel (10) liefert, wenn der Betrag des Verknüpfungsergebnisses (M'') den Betrag des eingegebenen Wertes (K) überschreitet.

4. Vorrichtung nach Anspruch 3, dadurch gekennzeichnet, daß die Steuerungsmittel eine Verknüpfungseinrichtung umfassen, die mit dem Drehwinkelgeber (11) verbunden sind und dann das Signal (A) zum Abschalten der Antriebsmittel (10) an die Motorsteuerung (17) weitergeben, wenn nach dem Erscheinen des Abschaltsignals (A) die Antriebsmittel (10) einen vorbestimmten Winkelbetrag ($\beta_n$) weitergedreht haben.

5. Vorrichtung nach einem der Ansprüche 3 oder 4, dadurchgekennzeichnet, daß die Steuerungsmittel (20) derart ausgebildet sind, daß zusätzlich (mit Priorität) dann ein Abschaltsignal (A) an die Motorsteuerung (17) geliefert und ein Störungssignal abgegeben wird, wenn die den Antriebsmitteln (10) zugeführte Leistung einen vorbestimmten Wert überschreitet.

6. Verfahren nach einem der Ansprüche 3 - 5, dadurch, gekennzeichnet, daß die Steuerungsmittel derart ausgebildet sind, daß zusätzlich (mit Priorität) dann ein Abschaltsignal (A) an die Motorsteuerung (17) geliefert und ein Störungssignal abgegeben wird, wenn trotz Energiezufuhr zu den Antriebsmittel (10) keine Änderung des Drehwinkels ($\beta$) erfolgt.

7. Vorrichtung nach einem der Ansprüche 3 - 6, dadurch gekennzeichnet, daß die Steuerungsmittel (20) derart ausgebildet sind, daß zusätzlich (mit Priorität) dann ein Abschaltsignal (A) an die Motorsteuerung (17) geliefert und ein Störungssignal abgegeben wird, wenn bei Vorliegen des ersten Ausgangssignals ($A_S$) ein zusätzlicher, vorgegebener Maximaldrehwinkel ($\beta_{max}$) erreicht ist und dennoch ein vorgegebenes Mindestdrehmomet ($M_{min}$) nicht erreicht ist.

8. Vorrichtung nach einem der Ansprüche 3 - 7, dadurch gekennzeichnet, daß die Steuerungsmittel (20) derart ausgebildet sind, daß zusätzlich (mit Priorität) dann ein Abschaltsignal (A) an die Motorsteuerung (17) geliefert und ein Störungssignal abgegeben wird, wenn bei Vorliegen des ersten Ausgangssignals ($A_S$) ein vorgegebenes Maximaldrehmoment ($M_{max}$) erreicht ist und dennoch ein vorgegebener Mindestdrehwinkel ($\beta_{min}$) nicht erreicht ist.

9. Vorrichtung nach einem der Ansprüche 3 - 8, dadurch gekennzeichnet, daß die Antriebsmittel einen Drehstrommotor (10) mit vorgesetztem Getriebe (13) und die Steuerungsmittel zur Motorsteuerung einen Vier-Quadrantenregler (17) umfassen.

Fig. 1

Fig. 2